# EUROPEAN PATENT APPLICATION

(11) **EP 2 515 251 A1**
(43) Date of publication of application: **24.10.2012**
(21) Application number: 12162221.1
(22) Date of filing: 29.03.2012
(51) Int. Cl.: G06F 21/00

(54) **Dual environment computing system and method and system for providing a dual environment computing system**

(30) Priority: 29.03.2011 GB 201105222
(71) Applicant: Becrypt Limited, London WC2E 9RA (GB)
(72) Inventor: Palka, Andrew, London, WC2E 9RA (GB); Holloway, David, London, WC2E 9RA (GB); Lee, Nigel, London, WC2E 9RA (GB); Parsons, Bernard, London, WC2E 9RA (GB)
(74) Representative: Exell, Jonathan Mark

(57) **Abstract**

A dual environment computing system and method is disclosed. The dual computing system (10) includes a first computing environment (20) and a second computing environment (30). A data repository (40) encodes, at any one time, at least one of the first (20) and second (30) computing environments in a hibernated state. The dual environment computing system (10) is arranged, on demand, to operate one of the first (20) and second (30) computing environments in an active state, the dual environment computing system (10) being further arranged, on demand, to transition the one of the first (20) and second (30) computing environments being operated in the active state into a hibernated state in the data repository and to transition the other of the first (20) and second (30) computing environments from the hibernated state into an active state.

## Description

### Field of the Invention

The present invention relates to a dual environment computing system and a method and system for providing a dual environment computing system that are particularly suitable for providing computer environments with differing security levels.

### Background to the Invention

Today's home computers are exceptionally vulnerable to internet-based fraud, viruses and malware. The growth of malware and its increasing sophistication is not being adequately stemmed by anti-virus software, with its reliance on detecting viruses that are ever evolving by static signature-based technology. Another type of threat is termed the root-kit - these have increasingly evaded detection completely.

While there are limits to the abilities of anti-virus technology, a bigger threat is the effect of human behaviour. Virus and malware writers and even legitimate advertisers work hard to encourage a user to follow a web link, or open a document attachment. All too often these lead to exploits or hidden payloads. Organised criminals, many from emerging economies, are increasingly exploiting these dynamics, and with social engineering and DIY malware kits, have created a multi-million dollar industry, that has led analysts to reflect that "the bad guys are winning".

For most home users today, particularly with computers shared by multiple family members, the best they can hope is that the inevitable build-up of unwanted software and malware on their machine will be generally benign. While one or two members of a family may be computer literate and know how to spot scams and malware, they will not always be present or able to assist the more naive users.

In spite of this, and by contrast, many security conscious organisations manage to maintain healthy computer systems that, if managed carefully, remain free of the common exploits of the home environment. This is achieved through the constant application of expertise, tools and processes that prevent or at least detect activity that can compromise the integrity of their environment.

Unfortunately, these tools and the necessary expertise to apply and manage them are generally not available to the home user. Having an administrator or tech support on call on an on-demand basis is typically not possible for most home users. Indeed, even if the types of monitoring and security tools were available to a family, it is likely that they would be turned off or overridden when they inevitably blocked some legitimate site or application and the person designated as the "administrator" wasn't home or didn't have the time to properly deal with it.

One of the biggest issues is that a home computer may be used for very different purposes at different times of the day or by different users. For example, the children may do their homework and play games at one point and the parents may later wish to access electronic banking, file a tax return or perform other sensitive tasks later. Even when there is not this delineation between users, there is almost always some division in terms of uses - for example a user may not be so concerned about security when using facebook or browsing the web but when the user wants to access emails, electronic banking or secure websites, security becomes a key issue.

It has been suggested in the past that separate user accounts on a computer can provide some security. However, malware typically infects an entire operating system and means that even if some user data cannot be accessed when the malware first infects the computer, the malware will be present when a different user of the other account logs in and can access that user's data at that time.

Even measures such as smart cards and hardware card readers can only provide so much security - if malware happens to have key logging or video capture capabilities, even sophisticated hardware security measures can be side-stepped.

One suggestion to avoid viruses and malware that has been made is for users to use operating systems provided on so-called "live CD" and "live DVD". This term is used to denote an operating system that is bootable from the CD or DVD carrier medium onto which it is encoded and which contains a complete functioning operating system. In such a scenario, the hard disk of the computer on which the live CD is booted need never be accessed and malware etc that may be resident in the operating system on the hard disk would not be executed. As long as the live CD itself is clean of keyloggers, malware etc, the user would be provided with a more secure computing environment. However, there are problems associated with this approach.

Firstly, live CDs can be distributed in such a state that they cannot be written to. While this has security benefits, it means that the user starts with a blank canvas each time and cannot store configuration settings such as the address of an email server, favourite websites etc. If a live CD is selected that allows changes to be permanently made to the environment, security is no better than using a freshly installed operating system on the hard disk - malware can be introduced into the system and the initial "security" is soon eroded unless the user is very careful.

In addition, the performance of live CD operating systems is normally reduced due to the fact that it must be executed from memory and CD/DVD only and bandwidth and access speed for CD/DVD drives is significantly slower than that of a hard disk.

It is clear that there remains a need for a user-friendly manner of providing security on demand. Security is not essential at all times (and there will inevitably be times where there are reasons not to have the most secure computing environment) but when it is needed, the user must be assured of its integrity.

### Statement of Invention

According to an aspect of the present invention, there is provided a dual environment computing system comprising:
a first computing environment;
a second computing environment;
a data repository encoding, at any one time, at least one of the first and second computing environments in a hibernated state;
wherein the dual environment computing system is arranged, on demand, to operate one of the first and second computing environments in an active state, the dual environment computing system being further arranged, on demand, to transition the one of the first and second computing environments being operated in the active state into a hibernated state in the data repository and to transition the other of the first and second computing environments from the hibernated state into an active state.

The data repository may comprise a non-volatile storage device such as a hard drive or SSD associated with the computing system.

Preferably, at least one of the first and second computing environments is encrypted when in a hibernated state, the dual environment computing system further comprising an encryption component configured to decrypt the encrypted computing environment when it is transitioned into the active state.

The dual environment computing system may include an identifier defining the or each computing environment to be encrypted when in a hibernated state, the encryption component being configured to encrypt a computing environment being transitioned to the hibernated state in dependence on the identifier.

The encryption component is preferably configured to operate transparently to the user.

The dual environment computing system may further comprise an authentication component configured to control decryption of the encrypted computing environment and allow decryption upon successful authentication of a user.

The dual environment computing system may further comprise a memory purge component configured, during or after transitioning one of said first and second computing environments to said hibernated state, to erase data stored in volatile memory of the computing system.

The dual environment computing system may further comprise a hibernation trigger component comprising computer program code executable from within the computing environment in the active state to cause said transition.

One of the first and second computing environments may include an antivirus and/or malware scanner configured to scan the other of the first and second computing environment when in the hibernated state for viruses and/or malware.

The dual environment computing system may be configured to place both the first and second computing environments into a hibernated state upon the one of the first or second computing environment being commanded to shut down.

At least one of the first and second computing environments may be configured, when in an active state, to limit access from the respective computing environment to one or more predetermined remote network addresses.

According to another aspect of the present invention, there is provided a method for operating a dual computing environment in a computer system, the dual computing environment comprising a first and second computing environment, at least one of which is stored in a hibernated state, method comprising:
causing the computing system to switch, during a hibernate and resume operation, from an active one of the first and second computing environments to the hibernated one of the first and second computing environments and whereby the active one of the first and second computing environments is placed in a hibernated state and the hibernated one of the first and second computing environments is placed in an active state.

The method may further comprise:
installing the dual computing environment to a computer system having the first computing environment by installing the second computing environment in a data repository associated with the computing system; and,
updating said first computing environment to cause said switching upon activation of a hibernate operation.

The step of updating may include replacing any existing hibernation system in said first computing environment with computer program code executable from within the computing environment when in the active state and, when executed, is configured to cause said transition

The step of updating may include reconfiguring an existing hibernation system in said first computing environment to cause said transition.

The method preferably comprises storing at least one of the first and second computing environments in an encrypted form when in a hibernated state, the method further comprising decrypting the computing environment in the encrypted form when it is transitioned into the active state.

The method may further comprise performing said decryption transparently to the user.

The method may further comprise performing antivirus and/or malware scanning on the respective first or second computing environment in the hibernated state from within the other of the first or second computing environments whilst in the active state.

The method may further comprise placing both the first and second computing environments into a hibernated state upon the one of the first or second computing environment being commanded to shut down.

According to another aspect of the present invention, there is provided a system for providing a dual computing environment to a computer system, the dual computing environment comprising a first computing environment and a second computer environment, at least one of which is stored in hibernated state in a data storage device associated with the computing system, the system comprising computer readable media encoding computer program code configured, when executed from within one of the first and second computing environments, to cause hibernation of the respective first or second computing environment from within which the code was executed and resuming, from the hibernated state of the other of the first and second computing environments.

According to another aspect of the present invention, there is provided a dual environment computing system comprising:
a first computing environment;
a second computing environment;
a data repository encoding, at any one time, at least one of the first and second computing environments in a hibernated state;
wherein the dual environment computing system is arranged, on demand, to operate one of the first and second computing environments in an active state, the dual environment computing system being further arranged, on demand, to transition the one of the first and second computing environments being operated in the active state into a hibernated state in the data repository and to transition the other of the first and second computing environments from the hibernated state into an active state.

According to another aspect of the present invention, there is provided a system for providing a dual computing environment to a computer system having an existing computer environment, the system for providing the dual computing environment comprising computer readable media encoding a further computing environment and an activation component, wherein upon execution within the existing computing environment of the computer system, the activation component being operative to:
install the further computing environment in a hibernated state alongside the existing computing environment on the computer system; and,
configure the computing system to switch, during a hibernate and resume operation, from an active one of the existing computing environment and the further computing environment to the hibernated one of the existing computing environment and the further computing environment whereby the active computing environment is placed in a hibernated state and the hibernated computing environment is placed in an active state.

A secure computing environment is created on a user's machine, completely isolated from a potentially infected (or infectable) environment. The secure computing environment provides a safe enclave from which to carry out online activities in confidence; be that online banking, e-payments or even email. Any malicious software present on the machine cannot interfere with the secure enclave.

Documents can also be stored in the secure enclave, rendering them inaccessible to anyone other than the legitimate owner.
- Secure online activities isolated from any malicious software on the machine
- Removes the reliance on family member "safe practices"
- Secure enclave for safe storage

The use of encryption enforces isolation between computing environments as an authentication mechanism ensures the key is only available in one environment. In this regard, the user benefits by being isolated from malware to a degree equivalent to the strength of a cryptographic algorithm.

### Brief Description of the Drawings

Embodiments of the present invention will now be described in detail, by way of example only, with reference to the accompanying drawings in which:
Figure 1 is a schematic diagram of a dual environment computing system according to an embodiment of the present invention; and,
Figures 2 and 3 are flow diagrams illustrating memory wiping processes used by embodiments of the present invention.

### Detailed Description

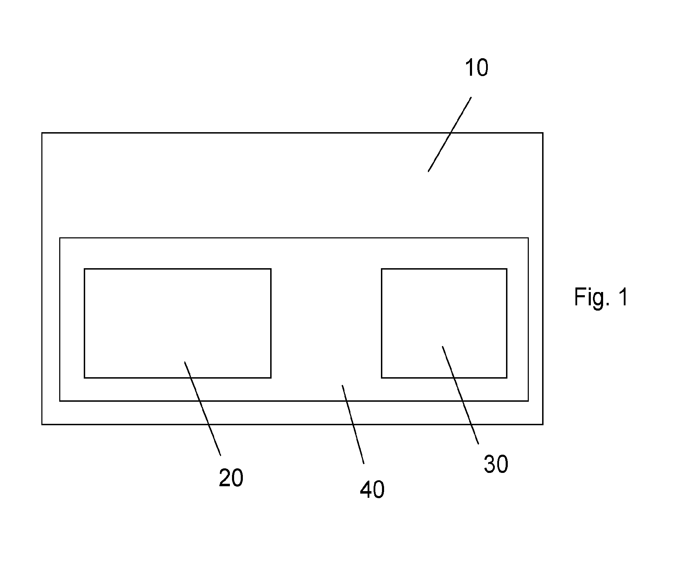

Figure 1 is a schematic diagram of a dual environment computing system according to an embodiment of the present invention.

The dual environment computing system 10 comprises:
a first computing environment 20;
a second computing environment 30;
a data repository 40 encoding, at any one time, at least one of the first 20 and second 30 computing environments in a hibernated state.

The dual environment computing system 10 is arranged, on demand, to operate one of the first 20 and second 30 computing environments in an active (operational) state. The dual environment computing system is further arranged, on demand, to transition the one of the first 20 and second 30 computing environments that is being operated in the active state into a hibernated state in the data repository 40 and to transition the other of the first 20 and second 30 computing environments from the hibernated state into an active state.

Preferably, the first computing environment 20 is a main, preferably uncontrolled, computing environment of the computing system 10 (the first computing environment may have been in place prior to installation of the second computing environment 30) and the second computing environment 30 is a secure computing environment.

Computer systems typically have certain low power states referred to as S-states including S3 and S4.

S3 is sometimes referred to as Standby, Sleep, or Suspend to RAM. State S3 is a sleep state in which the operating system (OS) saves its context into physical memory (dynamic random access memory (DRAM)) and puts the system into a suspend state. Open documents and programs (applications) that were used at the time of entering into S3, or at least a portion of the programs are also saved in DRAM during the suspend state. During this suspend state, all power is removed from the platform hardware with the exception of the DRAM and a small amount of circuitry used to later wake the system. The S3 power state provides a relatively fast suspend and resume (wake) time due to its ability to save and restore OS context and previously used programs and documents from hi-speed DRAM memory. However, the S3 sleep state cannot be maintained indefinitely as power is still being consumed.

S4 is sometimes referred to as Hibernate, Safe Sleep, or Suspend to disk. In S4, the OS context and open documents and programs (or a portion thereof) are saved on a hard disk drive (HDD). Typical S4 hibernate and resume times are in the order of 10s of seconds.

In preferred embodiments of the present invention, a small secure operating system is installed on the user's computer system 10 which provides the secure computing environment 30. The secure computing environment 30 exists alongside, yet is logically separate to, the main computing environment 20 provided by the computer system's main operating system. The secure operating system is used to create the secure computing environment 30. The contents and integrity of the secure computing environment 30 are preferably strictly controlled and the installation of arbitrary software is preferably prevented.

When the secure computing environment 30 is operational, the main computing environment 20 is in a hibernated state and is completely dormant.

This prevents malicious software that may be present in the main computing environment from executing, and interfering with the secure computing environment 30 and actions of the user.

Preferably, the secure computing environment 30 is fully encrypted when in its hibernated state (preferably in a manner that is completely transparent to the user). This prevents tampering by malicious software when the main computing environment 20 (or any other environment such as an operating system booted off a live-CD or USB key) is operational. Encryption also protects any locally stored data should the computer be lost or stolen. Encryption may optionally be provided in the form of a FIPS approved implementation of AES 256. Trusted Platform Module support may optionally be available for Trusted boot attestation (subject to a TPM system on the computer system).

To launch the secure computing environment 30 from within the main computing environment 20, the user simply selects an icon from their normal desktop, an option from a menu bar etc or performs some other selection operation within the main environment 20 provided by the main operating system. This causes the main operating system to hibernate (enter a sleep state), and in turn brings operating system hosting the secure computing environment out of its sleep state. Once the user enters a password matching that held by the secure computing environment 30, secure computing can commence.

When the secure computing environment 30 is no longer needed, this process is reversed, the secure computing environment 30 is hibernated and the main operating system is awakened. Within seconds, the machine is returned for normal every day use.

The secure operating system may be based on a stripped down version of Linux. Operating system patches for the secure operating system may be controlled by a trusted remote patch server.

Optionally, anti-virus software and anti-malware can be provided within the secure computing environment 30 for virus, malware and/or root-kit detection in the main operating system. This is advantageous in that malware and other threats could not be active while the main computing environment is dormant and thus could not actively evade detection or removal.

Optionally, the computer system 10 may be arranged to place both the secure computing environment 30 and the main computing environment 20 into a hibernated state in the data repository 40 on shut-down or on entering a sleep or hibernate mode. In such an arrangement, a menu may be provided on start-up for the user to select which environment to awaken or the computer system 10 may alternatively record the last used environment in the data repository 40 and awaken the environment according to its record. In this arrangement, although shut-down functionality may be redirected to cause hibernation, a shut-down function would still be retained (just not as default) so that activities that require shut-down/reboot (such as application of some patches) can still be performed.

In a preferred embodiment, the secure computing environment 30 may, in operation, take control of the computer system 10 such that upon shut down or upon hibernation of the secure computing environment, the secure computing environment 30 is operative to erase data stored in volatile memory in the host and also erase itself from the computer system 10.

The secure computing environment 30 preferably provides controllable access to resources of the computer system 10 and also to the internet. For example, access to resources on the computer system 10 could be blocked. Alternatively, access to input devices such as scanners may be enabled. Similarly, limited access to the internet such as to limited IP addresses may be enabled to allow a virtual private network to be created between the host and a corporate network, banks etc.

The secure computing environment 30 is preferably encrypted whilst in the hibernated state. A boot system on the computer system 10 is arranged to take over the boot/awaken from hibernation process when the secure computing environment is to be accessed. The boot system preferably triggers a pre-boot security check in which the integrity of the hibernated secure computing environment in the data repository 40 is tested and also during which time user authentication is performed.

Successful authentication causes the boot system to decrypt and load the secure computing environment in the computer system 10.

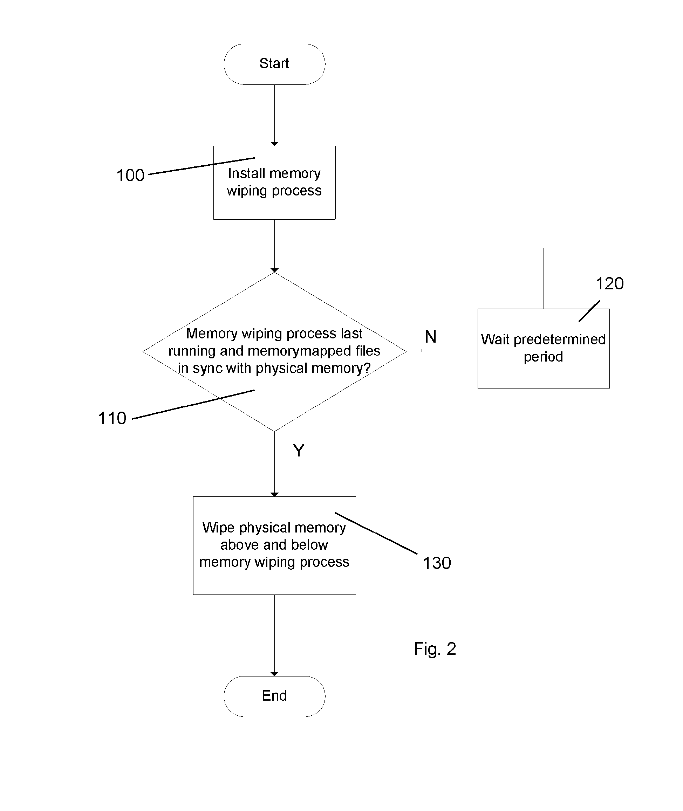

The wiping of the computing environment is preferably achieved in a manner that fully ensures preservation of the application doing the wiping, and its ability to address all of physical memory, i.e. not just the virtual memory mapped by the OS. This process is illustrated in the flow diagram of Figure 2. In step 100, a memory wiping process is installed in physical memory. In step 110, the memory wiping process checks to ensure sure it is the last process/thread/interrupt running and that memory mapped files are in sync with physical disks. If not, the process waits for a predetermined period in step 120 and loops to step 110 to check again. Optionally, the process may (possibly after a predetermined amount of time has expired) ask the system to end any other processes still running. These steps are taken to ensure there is no corruption of disk data. In step 130, the memory wiping process wipes physical memory above and below itself in the memory space. Wiping is preferably performed by writing random data into the physical memory to overwrite any prior content.

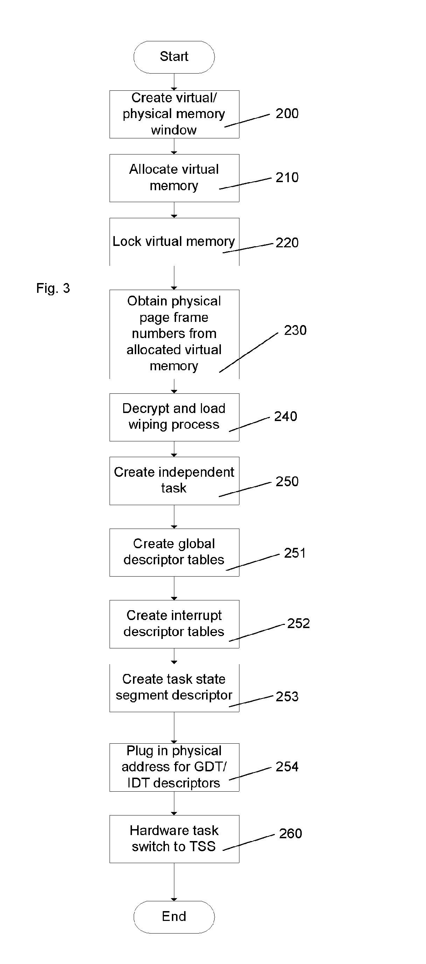

Figure 3 is a flow diagram illustrating step 100 of Figure 2 in more detail.

In step 200, the memory wiping process creates a virtual/physical memory window. This is done by allocating some virtual memory to hold the wiping process' code and x86 system descriptors in step 210, locking virtual memory in step 220 to prevent the OS from reallocate associated physical pages, obtaining all physical page frame numbers from allocated virtual memory in step 230 and decrypting (if encrypted) and loading the wiping process code in the allocated virtual memory in step 240.

A new independent i386 task is then created in step 250 by:
Creating GDT & Code/Data/Bss descriptors in step 251;
Create IDT descriptor in step 252;
Create TSS descriptor for a 32bits flat address space without paging enabled in step 253; and,
Plugging in a physical address (page frame numbers identified in step 230) for GDT/IDT descriptors into the TSS in step 254.

A hardwired task switch to the TSS is then performed in step 260.

This causes the system to switch into flat 32bit protected mode without paging, remove all the Linux system setup and start the wiper code.

Building a boot process in 'reverse' by replacing cpu tables by ones specifically developed for this task.

Making sure the controlling process is the last process to run, prohibiting networking and recovery from the cleanup process.

Once it is determined that the process is the last running, a 'transition' page is allocated and set up. Clean up is then performed from the protected transition page.

It will be appreciated that memory may be wiped for each transition or it may be that only when transitioning from the secure to non-secure environment is memory wiped.

In a preferred embodiment of the present invention a system is arranged to provide a dual computing environment to a computer system having an existing computer environment.

The system for providing the dual computing environment comprises computer readable media encoding a further computing environment and an activation component. Upon execution within the existing computing environment of the computer system, the activation component is operative to:
install the further computing environment in a hibernated state alongside the existing computing environment on the computer system; and,
configure the computing system to switch, during a hibernate and resume operation, from an active one of the existing computing environment and the further computing environment to the hibernated one of the existing computing environment and the further computing environment whereby the active computing environment is placed in a hibernated state and the hibernated computing environment is placed in an active state.

It will be appreciated that more than two computing environments may be hosted and transitioned between using embodiments of the present invention. In such an arrangement, a menu may be provided allowing a user to select the environment to switch to or alternatively, a command parameter of some description may be used to designate the environment.

Embodiments of the present invention may be integrated or otherwise interfaced with existing computing environments so as to interface with or replace existing hibernate/resume systems or functions. Alternatively, an additional hibernate/resume function may be provided alongside that already existing in the computing environment.

In an alternative embodiment, a small footprint hypervisor type environment that is separate to the computing environments may be provided. In this embodiment, the hypervisor is booted and remains in operation irrespective of the computing environment being used. Calls for hibernate/resume are passed to the hypervisor which handles booting of the selected computing environment, encryption/decryption and transitioning to and from hibernated states as appropriate. In this manner, the hypervisor may retain control of the computer system and low level operations. For example, this can mean that the active system can be hibernated, memory other than the hypervisor wiped and then the other selected environment then transitioned from the hibernated state to an active state under the control of the hypervisor.

It is to be appreciated that certain embodiments of the invention as discussed below may be incorporated as code (e.g., a software algorithm or program) residing in firmware and/or on computer useable medium having control logic for enabling execution on a computer system having a computer processor. Such a computer system typically includes memory storage configured to provide output from execution of the code which configures a processor in accordance with the execution. The code can be arranged as firmware or software, and can be organized as a set of modules such as discrete code modules, function calls, procedure calls or objects in an object-oriented programming environment. If implemented using modules, the code can comprise a single module or a plurality of modules that operate in cooperation with one another.

Optional embodiments of the invention can be understood as including the parts, elements and features referred to or indicated herein, individually or collectively, in any or all combinations of two or more of the parts, elements or features, and wherein specific integers are mentioned herein which have known equivalents in the art to which the invention relates, such known equivalents are deemed to be incorporated herein as if individually set forth.

Although illustrated embodiments of the present invention have been described, it should be understood that various changes, substitutions, and alterations can be made by one of ordinary skill in the art without departing from the present invention which is defined by the recitations in the claims below and equivalents thereof.

## Claims

1. A dual environment computing system comprising:
a first computing environment;
a second computing environment;
a data repository encoding, at any one time, at least one of the first and second computing environments in a hibernated state;
wherein the dual environment computing system is arranged, on demand, to operate one of the first and second computing environments in an active state, the dual environment computing system being further arranged, on demand, to transition the one of the first and second computing environments being operated in the active state into a hibernated state in the data repository and to transition the other of the first and second computing environments from the hibernated state into an active state.

2. The dual environment computing system of claim 1, wherein the data repository comprises a non-volatile storage device associated with the computing system.

3. The dual environment computing system of claim 1 or 2, wherein at least one of the first and second computing environments is encrypted when in a hibernated state, the dual environment computing system further comprising an encryption component configured to decrypt the encrypted computing environment when it is transitioned into the active state.

4. The dual environment computing system of claim 3, further comprising an identifier defining the or each computing environment to be encrypted when in a hibernated state, the encryption component being configured to encrypt a computing environment being transitioned to the hibernated state in dependence on the identifier.

5. The dual environment computing system of claim 3 or 4, wherein the encryption component is configured to operate transparently to the user.

6. The dual environment computing system of claim 3, 4 or 5, further comprising an authentication component configured to control decryption of the encrypted computing environment and allow decryption upon successful authentication of a user.

7. The dual environment computing system of any preceding claim, further comprising a memory purge component configured, during or after transitioning one of said first and second computing environments to said hibernated state, to erase data stored in volatile memory of the computing system.

8. The dual environment computing system of any preceding claim, further comprising a hibernation trigger component comprising computer program code executable from within the computing environment in the active state to cause said transition.

9. The dual environment computing system of any preceding claim, wherein one of the first and second computing environments includes an antivirus and/or malware scanner configured to scan the other of the first and second computing environment when in the hibernated state for viruses and/or malware.

10. The dual environment computing system of any preceding claim, wherein the dual environment computing system is configured to place both the first and second computing environments into a hibernated state upon one of the first or second computing environment being commanded to shut down.

11. The dual environment computing system of any preceding claim, wherein at least one of the first and second computing environments is configured, when in an active state, to limit access from the respective computing environment to one or more predetermined remote network addresses.

12. A method for operating a dual computing environment to a computer system, the dual computing environment comprising a first and second computing environment, at least one of which is stored in a hibernated state, method comprising:
causing the computing system to switch, during a hibernate and resume operation, from an active one of the first and second computing environments to the hibernated one of the first and second computing environments and
whereby the active one of the first and second computing environments is placed in a hibernated state and the hibernated one of the first and second computing environments is placed in an active state.

13. The method of claim 12, further comprising:
installing the dual computing environment to a computer system having the first computing environment by installing the second computing environment in a data repository associated with the computing system; and,
updating said first computing environment to cause said switching upon activation of a hibernate operation.

14. A computer program comprising computer program code means for performing all of the steps of any of claims 12 or 13 when said program is run on a computer.

15. A computer program as claimed in claim 14 embodied on a computer readable medium.
